# EUROPÄISCHE PATENTANMELDUNG

(11) **EP 2 564 690 A1**
(43) Veröffentlichungstag der Anmeldung: **06.03.2013**
(21) Anmeldenummer: 11180023.1
(22) Anmeldetag: 05.09.2011
(51) Int. Cl.: A01G 9/02

(54) **Pflanztopf-Anordnung mit einem Übertopf und einem in den Übertopf einsetzbaren und herausnehmbaren Einsatztopf**

(71) Anmelder: Plastia s.r.o., 14100 Praha 4 (CZ)
(72) Erfinder: Novotny, Stanislav, 14100 Praha 4 (CZ)
(74) Vertreter: Jeck, Anton

(57) **Zusammenfassung**

Die Erfindung betrifft eine Pflanztopf-Anordnung mit einem Übertopf (10) und einem in den Übertopf (10) einsetzbaren Einsatztopf (20) zur Aufnahme von einer Pflanze mit Pflanzenerde. Das Einsetzen und Herausnehmen des Einsatztopfes (20) ist ohne Griffe ermöglichst, wobei der Einsatztopf (20) in der Oberseite nach oben offene, diagonal angeordnete Griffausnehmungen (11) aufweist, der Einsatztopf (20) in einen von der Unterseite des Einsatztopfes (20) aufgeschobenen Tragrahmen (30) eingehängt ist, der Einsatztopf (20) nach dem Einsetzen in den Übertopf (10) auf dem Boden des Übertopfes (10) aufsteht, wobei die Einhängestellung des Einsatztopfes (20) durch Absenken des Tragrahmens (30) in eine untere Stellung am Einsatztopf (20) aufhebbar und der Tragrahmen (30) auf der Oberseite des Übertopfes (10) ablegbar ist und der Tragrahmen (30) über die Griffausnehmungen (11) des Übertopfes (10) fassbar und der Einsatztopf (20) nach dem Bringen des Tragrahmens (30) in die Einhängestellung aus dem Übertopf (10) herausnehmbar ist.

## Beschreibung

Die Erfindung betrifft eine Pflanztopf-Anordnung mit einem Übertopf und einem in den Übertopf einsetzbaren und herausnehmbaren Einsatztopf nach dem Oberbegriff des Anspruches 1.

Eine derartige Pflanztopf-Anordnung ist aus der EP 1 790 212 B1 bekannt. Bei dieser bekannten Pflanztopf-Anordnung ist der Einsatztopf im Bereich des oberen Behälterrandes mit diagonal angeordneten Griffen versehen, die in Griff-Führungen geführt und in eine mit dem Übertopf bündige Einführstellung und in eine am Übertopf vorstehende Ausziehstellung einstellbar sind. Die Griffe können in der Ausziehstellung gefasst und der Einsatztopf aus dem Übertopf herausgenommen werden. Auch das Einsetzen des Einsatztopfes in den Übertopf geschieht mit den in die Ausziehstellung gebrachten Griffen. Danach werden die Griffe in die Einführstellung zurückgestellt, damit die Pflanztopf-Anordnung ohne die abstehenden Griffe einen optisch und gestalterisch guten Eindruck vermitteln.

Dies setzt eine komplizierte konstruktive Ausgestaltung des Einsatztopfes und zusätzliche Handgriffe beim Einsetzen und Herausnehmen des Einsatztopfes voraus.

Es ist Aufgabe der Erfindung, eine Pflanztopf-Anordnung zu entwickeln, die ohne verstellbare Griffe das Einsetzen und Herausnehmen des Einsatztopfes ermöglicht und dabei nach dem Einsetzen des Einsatztopfes in den Übertopf zusätzliche Handgriffe vermeidet, wobei sich nach dem Einsetzen des Einsatztopfes in den Übertopf automatisch eine optisch ansprechende Konstruktion ergibt.

Die gestellte Aufgabe wird durch die Merkmale des Anspruches 1 gelöst. Dabei weist der Übertopf im Bereich der Oberseite Griffausnehmungen auf, die diagonal angeordnet sind. Der Einsatztopf ist in einen Tragrahmen eingehängt. Der Übertopf steht nach dem Einbringen in den Übertopf auf dem Boden des Übertopfes auf, wobei die Einhängestellung des Einsatztopfes durch Absenken des Tragrahmens in eine untere Stellung aufhebbar und der Tragrahmen auf der Oberseite des Übertopfes ablegbar ist. Der Tragrahmen ist über die Griffausnehmungen des Übertopfes fassbar. Nach dem Bringen des Tragrahmens in die Einhängestellung ist der Einsatztopf aus dem Übertopf herausnehmbar.

Mit dem Tragrahmen kann der Einsatztopf bequem in den Übertopf eingesetzt werden. Beim Erreichen der Einsatzstellung des Einsatztopfes kann der Tragrahmen die Einhängestellung verlassen. Er kann abgesenkt und auf die Oberseite des Übertopfes abgelegt werden. Dabei kann der Tragrahmen an beliebigen Stellen gehalten werden, ohne dass die Hände zwischen dem Tragrahmen und der Oberseite des Übertopfes eingeklemmt werden. Nach dem Freigeben des Tragrahmens durch die Hände fällt der Tragrahmen aufgrund seines Eigengewichtes auf die Oberseite des Übertopfes und stellt dadurch automatisch den optischen Eindruck der Pflanztopf-Anordnung her.

Weitere vorteilhafte Ausgestaltungen der Pflanztopf-Anordnung sind den Unteransprüchen zu entnehmen.

Damit der Tragrahmen im Bereich der Oberseite des Einsatztopfes festgelegt werden kann, sieht eine Weiterbildung vor, dass der Tragrahmen durch einen Abdeckhalterahmen, der von der Oberseite des Einsatztopfes mit dem Tragrahmen verbindbar ist, im Bereich der Oberseite des Einsatztopfes begrenzt vertikal verstellbar ist.

Auf diese Weise ist die Einheit aus Tragrahmen und Abdeckhalterahmen am Einsatztopf festgelegt, was die Bedienung der Pflanztopf-Anordnung erleichtert.

Die vertikale Verstellbewegung des Tragrahmens mit dem Abdeckhalterahmen ist dabei auf mindestens die Abmessung einer zwischen dieser Einheit und der Oberseite des Übertopfes eingeführten Hand begrenzt.

Der Übertopf, der Einsatztopf, der Tragrahmen und der Abdeckhalterahmen weisen runden, quadratischen, rechteckförmigen oder ovalen Querschnitt auf, wobei die einzelnen Querschnitte aufeinander abgestimmt sind.

Der Einsatztopf weist am Boden angeformte Abstandshalter auf, die auf der Innenseite des Bodens des Übertopfes aufstehen und die Einstellposition des Einsatztopfes im Übertopf festlegen.

Der Tragrahmen weist eine nach oben offene Nut auf, in die ein nach unten weisender Steg des Einsatztopfes ragt und dass durch Anschlag des Steges in der Nut die Einhängestellung des Einsatztopfes im Tragrahmen mit dem Abdeckhalterahmen festgelegt ist.

In der Einhängestellung ist der Tragrahmen mit dem Abdeckhalterahmen in der oberen Stellung des Tragrahmens mit dem Abdeckhalterahmen im Bezug zur Oberseite des Einsatztopfes festgelegt.

Der Tragrahmen mit dem Abdeckhalterahmen ist bei auf dem Boden des Übertopfes aufgestelltem Einsatztopf in die untere Stellung im Bezug auf den Einsatztopf absenkbar, wobei der Tragrahmen und/oder der Abdeckhalterahmen sich auf der oberen Stirnseite des Übertopfes oder auf einem Innenabsatz des Einsatztopfes abstützt.

Der Abdeckhalterahmen, der die Oberseite der Pflanztopf-Anordnung abdeckt und den Halt der Einheit aus Tragrahmen und Abdeckhalterahmen am Einsatztopf festlegt, ist auf den Tragrahmen aufgerastet.

Die Erfindung wird anhand eines in den Zeichnungen dargestellten Ausführungsbeispiels näher erläutert. Es zeigen:
- Fig. 1: die Seitenansicht der Pflanztopf-Anordnung, wobei der obere Bereich im Schnitt dargestellt ist,
- Fig. 2: einen Teilschnitt entlang der Linie II-II der Fig. 1,
- Fig. 3: den in Fig. 2 mit dem Kreis III gekennzeichneten Bereich der Pflanztopf-Anordnung in der eingesetzten Stellung des Einsatztopfes und
- Fig. 4: die der Fig. 3 entsprechenden Bauteile in der Einhängestellung des Einsatztopfes und der Hand beim Erreichen der Einstellstellung des Einsatztopfes im Übertopf.

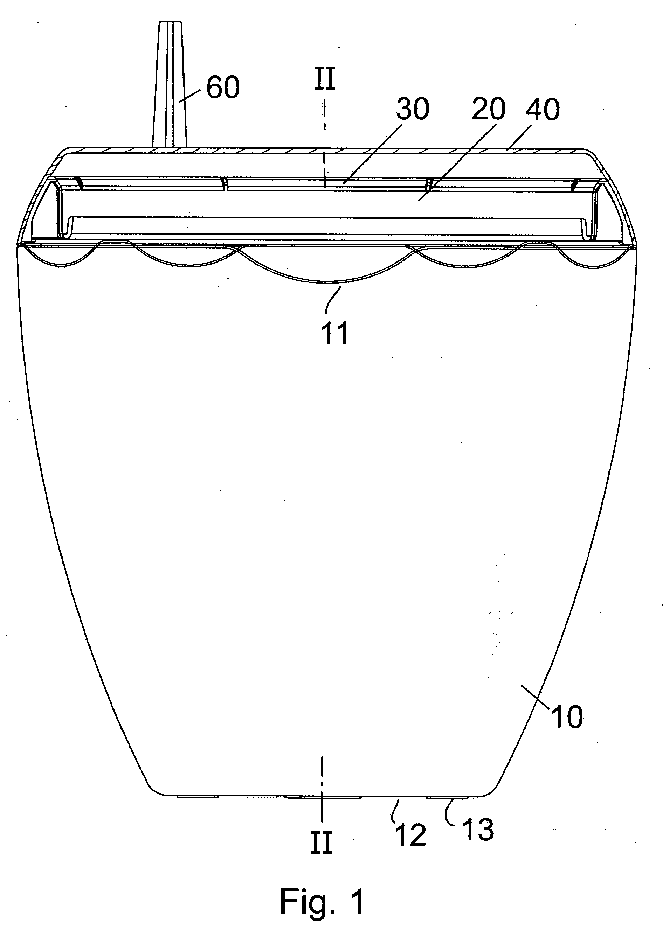

Aus Fig. 1 ist eine Pflanztopf-Anordnung mit rundem Querschnitt des Übertopfes 10, des Einsatztopfes 20, des Tragrahmens 30 und des Abdeckhalterahmens 40 zu sehen. Dabei ist im Bereich der Oberseite die Ansicht im Teilschnitt dargestellt, um die einzelnen Bauteile kennzeichnen zu können. Der Boden 12 des Übertopfes 10 trägt außen angeformte Stellplättchen 13. Mit dem Bezugszeichen 11 ist eine der diametral angeordneten Griffausnehmungen bezeichnet, die in der Oberseite des Übertopfes 10 nach oben offen sind.

Ein Füllstandsanzeiger 60 ragt an der Oberseite der Pflanztopf-Anordnung heraus, der in einer Führung des Einsatztopfes 10 bis in den Bereich zwischen dem Boden 12 des Übertopfes 10 und dem Boden 21 des Einsatztopfes 20 ragt und den Flüssigkeitsstand anzeigt.

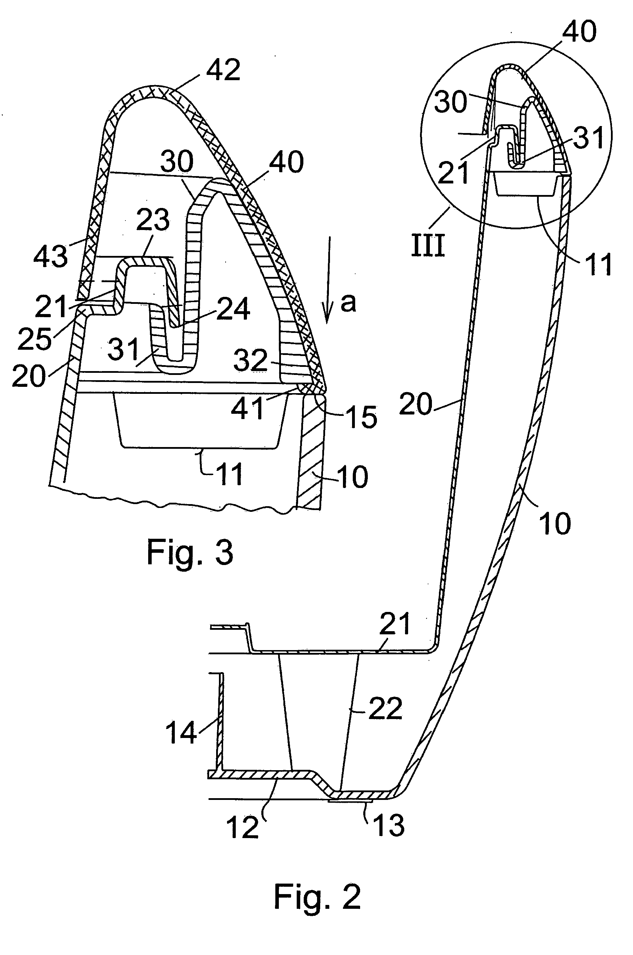

Wie Fig. 2 zeigt, steht der Einsatztopf 20 über am Boden 21 angeformte Abstandshalter 22 auf der Innenseite des Bodens 12 des Übertopfes 10 auf. Der in Fig. 2 durch den Kreis III gekennzeichnete Bereich ist in Fig. 3 vergrößert wiedergegeben. Dabei ist im Bereich der Oberseite des Einsatztopfes 10 eine Einheit aus Tragrahmen 30 und Abdeckhalterahmen 40 begrenzt vertikal verstellbar festgelegt. Der Tragrahmen 30 ist von unten auf den Einsatztopf 20 aufgeschoben, während der Abdeckhalterahmen 40 von oben her mit dem Tragrahmen 30 verbunden, vorzugsweise verrastet ist. Der Einsatztopf 20 weist einen Innenabsatz 25 auf, der über einen vertikalen Schenkel 21 und einen horizontalen Schenkel 23 in einen nach unten gerichteten Steg 24 übergeht. Der Steg 24 ist in eine nach oben offene Nut 31 des Tragrahmens 30 eingeführt. Der Tragrahmen 30 ist mit dem Außenschenkel 32 mit dem Außenschenkel 42 des Abdeckhalterahmens 40 verbunden, vorzugsweise verrastet, wie die Rastelemente 41 zeigen. Der Innenschenkel 43 des Abdeckhalterahmens 40 stützt sich auf dem Innenabsatz 25 des Einsatztopfes 20 ab. Diese untere Stellung der Bauteile stellt sich automatisch ein, wenn der Einsatztopf 20 im Übertopf 10 abgestellt ist. Aus der Fig. 3 ist auch ersichtlich, dass die Einhängestellung des Einsatztopfes 20 im Tragrahmen 30 aufgehoben ist. Wie der Pfeil a andeutet, ist die Stellung nach Fig. 3 durch das Eigengewicht der Einheit aus Tragrahmen 30 und Abdeckhalterahmen 40 bedingt und stellt sich nach dem Erreichen der Einstellung des Einsatztopfes 20 im Übertopf 10 automatisch ein.

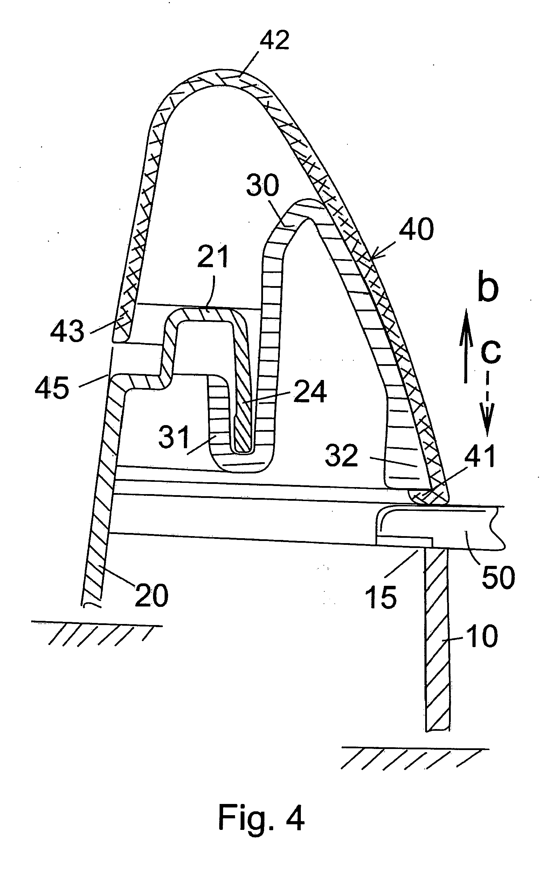

Anhand der Fig. 4 lässt sich zeigen, dass die Einhängestellung des Einsatztopfes 20 in der Einheit aus Tragrahmen 30 und Abdeckhalterahmen 40 in der oberen Verstellung der Einheit im Bezug zum Einsatztopf 20 gegeben ist. Die entsprechende Stellung von Einsatztopf 20 und Übertopf 10 ist dabei vorgegeben. Dies bedeutet, dass die Einheit aus Einsatztopf 20 und Übertopf 10 das Fassen der Einheit an beliebiger Stelle zulässt, ohne die Hand 50 zwischen dem Außenschenkel 41 des Abdeckhalterahmens 40 und der Oberseite 15 des Übertopfes 10 einzuklemmen. Die in Richtung des Pfeils 6 verstellte Einheit aus Tragrahmen 30 und Abdeckhalterahmen 40 lässt dabei ausreichenden Platz für die die Einheit fassende hand 50. Gibt die Hand 50 die Einheit aus Tragrahme 30 und Abdeckhalterahmen 40 frei, dann senkt sich die Einheit nach unten ab, wie der Pfeil c andeutet, bis sie schließlich die in Fig. 3 gezeigte untere Stellung einnimmt. Dies erfolgt durch das Eigengewicht der Einheit automatisch.

In der Stellung nach Fig. 3 bleiben die nach oben offenen Griffausnehmungen 11 zum Einführen der Hände frei. Die Einheit wird angehoben und nimmt die Einhängestellung nach Fig. 4 ein. Mit der Einheit aus Tragrahmen 30 und Abdeckhalterahmen 40 kann der Einsatztopf 20 nach Einstellung in die Einhängestellung aus dem Übertopf 10 herausgenommen werden.

Der Übertopf 10 kann eine größere Wandstärke aufweisen als der Einsatz 20, der Tragrahmen 30 und der Abdeckrahmen 40.

## Patentansprüche

1. Pflanztopf-Anordnung mit einem Übertopf (10) und einem in den Übertopf (10) einsetzbaren und aus dem Übertopf (10) herausnehmbaren Einsatztopf (20) zur Aufnahme einer Pflanze mit Pflanzenerde, wobei der Übertopf (10) und der Einsatztopf (20) an der Oberseite offen ausgebildet sind,
**dadurch gekennzeichnet,**
**dass** der Übertopf (10) im Bereich der Oberseite Griffausnehmungen (11) aufweist,
**dass** der Einsatztopf (20) in einen Tragrahmen (30) eingehängt ist,
**dass** der Einsatztopf (20) nach dem Einsetzen in den Übertopf (10) auf dem Boden (12) des Übertopfes (10) aufsteht, wobei die Einhängestellung des Einsatztopfes (10) durch Absenken des Tragrahmens (30) in eine untere Stellung am Einsatztopf (20) aufhebbar und der Tragrahmen (30) auf der Oberseite des Übertopfes (10) ablegbar ist und
**dass** der Tragrahmen (30) über die Griffausnehmungen (11) des Übertopfes (10) fassbar und der Einsatztopf (20) nach dem Bringen des Tragrahmens (30) in die Einhängestellung aus dem Übertopf (10) herausnehmbar ist.

2. Pflanztopf-Anordnung nach Anspruch 1,
**dadurch gekennzeichnet,**
**dass** der Tragrahmen (30) durch einen Abdeckhalterahmen (40), der von der Oberseite des Einsatztopfes (20) mit dem Tragrahmen (30) verbindbar ist, im Bereich der Oberseite des Einsatztopfes (20) begrenzt vertikal verstellbar ist.

3. Pflanztopf-Anordnung nach Anspruch 2,
**dadurch gekennzeichnet,**
**dass** die vertikale Verstellbewegung des Tragrahmens (30) mit dem Abdeckhalterahmen (40) auf mindestens die Abmessung einer zwischen dieser Einheit und der Oberseite des Übertopfes (10) eingeführten Hand (50) begrenzt ist.

4. Pflanztopf-Anordnung nach einem der Ansprüche 1 bis 3,
**dadurch gekennzeichnet,**
**dass** der Übertopf (10), der Einsatztopf (20), der Tragrahmen (30) und der Abdeckhalterahmen (40) runden, quadratischen, rechteckförmigen oder ovalen Querschnitt aufweisen, wobei die einzelnen Querschnitte aufeinander abgestimmt sind.

5. Pflanztopf-Anordnung nach einem der Ansprüche 1 bis 4,
**dadurch gekennzeichnet,**
**dass** der Einsatztopf (20) am Außenboden (21) angeformte Abstandshalter (22) aufweist, die auf der Innenseite des Bodens (12) des Übertopfes (10) aufstehen und die Einstellposition des Einsatztopfes (10) im Übertopf (10) festlegen.

6. Pflanztopf-Anordnung nach einem der Ansprüche 1 bis 5,
**dadurch gekennzeichnet,**
**dass** der Tragrahmen (30) eine nach oben offene Nut (31) aufweist, in die ein nach unten weisender Steg (24) des Einsatztopfes (20) ragt und
**dass** durch Anschlag des Steges (24) in der Nut die obere Einhängestellung des Einsatztopfes (20) im Tragrahmen (30) mit dem Abdeckhalterahmen (40) festgelegt ist.

7. Pflanztopf-Anordnung nach Anspruch 6,
**dadurch gekennzeichnet,**
**dass** in der Einhängestellung der Tragrahmen (30) mit dem Abdeckrahmen (40) in der oberen Stellung des Tragrahmens (30) mit dem Abdeckhalterahmen (40) im Bezug zur Oberseite des Einsatztopfes (10) festgelegt ist.

8. Pflanztopf-Anordnung nach einem der Ansprüche 1 bis 7,
**dadurch gekennzeichnet**,
das der Tragrahmen (30) mit dem Abdeckhalterahmen (40) bei auf dem Boden (12) des Übertopfes (10) aufgestelltem Einsatztopfes (20) in die untere Stellung im Bezug auf den Einsatztopf (20) absenkbar ist, wobei der Tragrahmen (30) und/oder der Abdeckhalterahmen (40) sich auf der oberen Stirnseite des Übertopfes (10) oder auf einem Innenabsatz (45) des Einsatztopfes (20) abstützt.

9. Pflanztopf-Anordnung nach einem der Ansprüche 1 bis 8,
**dadurch gekennzeichnet,**
**dass** der Übertopf (10), der Einsatztopf (20), der Tragrahmen (30) und der Abdeckhalterahmen (40) aus Kunststoff bestehen, wobei der Übertopf (10) größere Wandstärke aufweist.

10. Pflanztopf-Anordnung nach einem der Ansprüche 2 bis 9,
**dadurch gekennzeichnet,**
**dass** der Abdeckhalterahmen (40) auf den Tragrahmen (30) aufgerastet ist.
